# EUROPÄISCHE PATENTSCHRIFT

(11) **EP 1 181 455 B1**
(45) Veröffentlichungstag und Bekanntmachung des Hinweises auf die Patenterteilung: **11.05.2005**
(21) Anmeldenummer: 01909438.2
(22) Anmeldetag: 10.01.2001
(51) Int. Cl.: F04D 29/20

(54) **VORRICHTUNG ZUM BEFESTIGEN EINES ANBAUTEILS MIT EINER IM WESENTLICHEN GLATTEN ANTRIEBSWELLE**
DEVICE FOR FIXING A SUBASSEMBLY TO AN ESSENTIALLY SMOOTH DRIVESHAFT
DISPOSITIF POUR FIXER UNE PIECE SUR UN ARBRE D'ENTRAINEMENT SENSIBLEMENT LISSE

(30) Priorität: 18.03.2000 DE 10013609
(43) Veröffentlichungstag der Anmeldung: 27.02.2002
(73) Patentinhaber: ROBERT BOSCH GMBH, 70442 Stuttgart (DE)
(72) Erfinder: KOPF, Frank, 77833 Ottersweier (DE)
(86) Internationale Anmeldenummer: PCT/DE2001/000058
(87) Internationale Veröffentlichungsnummer: WO 2001/071196

(56) Entgegenhaltungen:
- EP-A- 0 826 884
- DE-A- 19 752 372
- US-A- 2 707 108
- US-A- 3 112 116
- US-A- 4 245 957

## Beschreibung

### Stand der Technik

Die Erfindung geht aus von einer Vorrichtung zur Befestigung von Anbauteilen auf einer Antriebswelle nach der Gattung des unabhängigen Anspruchs.

Bei bekannten Vorrichtungen dieser Art werden die Anbauteile wie Werkzeuge oder Lüfter über eine Welle von Motoren angetrieben. Bei Anbauteilen aus Kunststoff wird dazu ein Mitnehmer mit Formschluss zum Anbauteil an der Antriebswelle angebracht. Am anzutreibenden Anbauteil befindet sich die, zum Mitnehmer entsprechende Gegenkontur, so dass eine Mitnahmewirkung in Drehrichtung der Antriebswelle erzielt wird. Die axiale Fixierung des Anbauteils auf der Antriebswelle erfolgt durch ein Federelement, das zwischen das Anbauteil und einer Nut, die in die Antriebswelle eingebracht wird, geklemmt wird.

Bei der Verwendung von glatten Antriebswellen erfolgt die axiale Fixierung des Anbauteils am Mitnehmer bisher durch Verschraubung des Anbauteils am Mitnehmer. Schraubverbindungen sind aber zeitaufwendig und damit fertigungstechnisch sehr kostenträchtig. Zudem erfordern Schraubverbindungen eine aufwendige Mitnehmerkonstruktion.

In der DE-GM 92050972 wird ein Lüfter beschrieben, der zur Sicherung des Lüfterrades in Achsrichtung ein Federelement mit 5 hackenartigen Armen benutzt, die durch die Nabe des Lüfterrades hindurchgreifen und mit Teilbereichen des Mitnehmers zusammenwirken. Federelemente dieser Art, die mehrere Federarme zur Sicherung des Anbauteils auf den Mitnehmer der Antriebswelle benutzen, erfordern eine anspruchsvolle Montage einschließlich einer aufwendigen Prüfung des korrekten Montagesitzes. Dies aber bedeutet einen erhöhten Zeit- Kostenaufwand.

Aus der DE 19752372A1 ist eine regelbare Kreiselpumpe, insbesondere für Verbrennungsmotoren bekannt, bei der das Schaufelrad der Pumpe mittels einer axial verschiebbaren Gleitlagerbuchse drehbar auf einer mit der Pumpenwelle drehfest verbundenen Wellenhülse angeordnet ist. Dabei sind Reibelemente ein- oder beidseitig drehfest am Schaufelrad, sowie ein oder mehrere Gleitelement an der mit der Pumpenwelle starr verbunden Wellenhülse derart angeordnet, dass mindestens eines dieser Gleitelemente auf der Wellenhülse axial verschiebbar angeordnet ist und an mindestens einem dieser axial verschiebbaren Gleitelemente direkt oder indirekt ein sich axial an der Wellenhülse abstützendes Thermoelement anliegt.

Aus der US 4,245,957 ist ein Lüfter mit einem Mitnehmer bekannt, bei dem das Lüfterrad auf den drehfest mit der Antriebswelle verbundenen Mitnehmer aufgelegt wird und über eine Kontermutter axial gesichert wird. Zwischen der Nabe des Lüfterrades und der Kontermutter befindet sich in axialer Richtung ein Federelement, welches sich einerseits am Lüfterrad und andererseits an der Kontermutter abstützt.

### Vorteile der Erfindung

Die erfindungsgemäße Vorrichtung zum Befestigen eines Anbauteils auf einer im wesentlichen glatten Welle mit den Merkmalen des Anspruchs 1 hat die Vorteile, dass sie die schnelle und einfache Montage von beliebigen Anbauteilen auf einer glatten Antriebswelle mit einem einfachen Federelement ermöglicht.

Die axiale Sicherung des Anbauteils auf der Antriebswelle kann, da der Mitnehmer das Anbauteil durchdringt, durch ein einfaches, Federelement übernommen werden, wodurch nicht nur herstellungsbedingte Toleranzen, sondern auch im Laufe der Zeit entstehendes Spiel ausgeglichen werden kann. Das Federelement ist leicht und kostengünstig herstellbar, montagesicher und in der Praxis der Massenfertigung anwendbar. Komplizierte und anfällige, mehrarmige Federelemente sind nicht mehr notwendig. Auf zeitaufwendige Verschraubungen des Anbauteils am Mitnehmer kann ganz verzichtet werden. Da sich das sichernde Federelement direkt am Mitnehmer der Antriebswelle abstützt und auf das Anbauteil wirkt, muss die Antriebswelle nicht durch zusätzliche Bearbeitungsschritte vorbereitet werden. Dies ermöglicht eine einfache und kostensparende Herstellung auch der Antriebswellen.

Durch die in den Unteransprüchen aufgeführten Maßnahmen sind vorteilhafte Weiterbildungen und Verbesserungen der in Anspruch 1 angegebenen Vorrichtung möglich.

Das Anbauteil wird bei der erfindungsgemäßen Vorrichtung zwischen dem Federelement und einem Teil des Mitnehmers eingeklemmt. Dabei kommt das Anbauteil stabil auf einer tellerähnlichen Verbreiterung des Mitnehmers zu liegen. Der Mitnehmer ist so geformt, dass sich das Federelement selbst wiederum an einem Teil des Mitnehmers abstützen kann. Das Federelement sitzt damit zwischen zwei Seiten des Mitnehmers, so dass beispielsweise eine zusätzliche Nut in der Welle zur Sicherung des Federelementes nicht mehr erforderlich ist.

Ein Anbauteil mit entsprechenden Aussparungen kann leicht auf den Mitnehmer der Antriebswelle geschoben werden. Durch die einfache axiale Federsicherung ist eine schnelle Montage gewährleistet und die Möglichkeit eines problemlosen Auswechselns des Anbauteils ist somit ebenfalls gegeben. Das Federelement selbst lässt sich gegen verrutschen und verdrehen auf dem Anbauteil leicht sichern. Als Federelement kann eine einfache, einteilige Feder wie beispielsweise eine standardisierte, kreisförmige Tellerfeder (so genannter C-Clip) benutzt werden.

Der Mitnehmer der erfindungsgemäßen Vorrichtung lässt sich in seiner speziellen Ausformung als Formteil leicht herstellen und gegebenenfalls auch direkt auf die Antriebswelle aufpressen.

Die erfindungsgemäßen Vorrichtung vereint somit zwei Funktionen in ihrem Mitnehmer. Zum einen gewährleistet der Mitnehmer die Mitnahme des Anbauteils in Drehrichtung der Antriebswelle und zum anderen ermöglicht er die axiale Fixierung des Anbauteils auf der Antriebswelle mittels eines einfachen Federelementes.

### Zeichnung

In der Zeichnung ist ein Ausführungsbeispiel der Erfindung dargestellt und in der nachfolgenden Beschreibung näher erläutert.

Es zeigen:
Fig. 1 einen Querschnitt der erfindungsgemäßen Vorrichtung entlang einer Schnittlinie I - I in Figur 2 und
Fig. 2 eine Ansicht der erfindungsgemäßen Vorrichtung in Richtung des Pfeils II in der Figur 1.

### Beschreibung des Ausführungsbeispiels

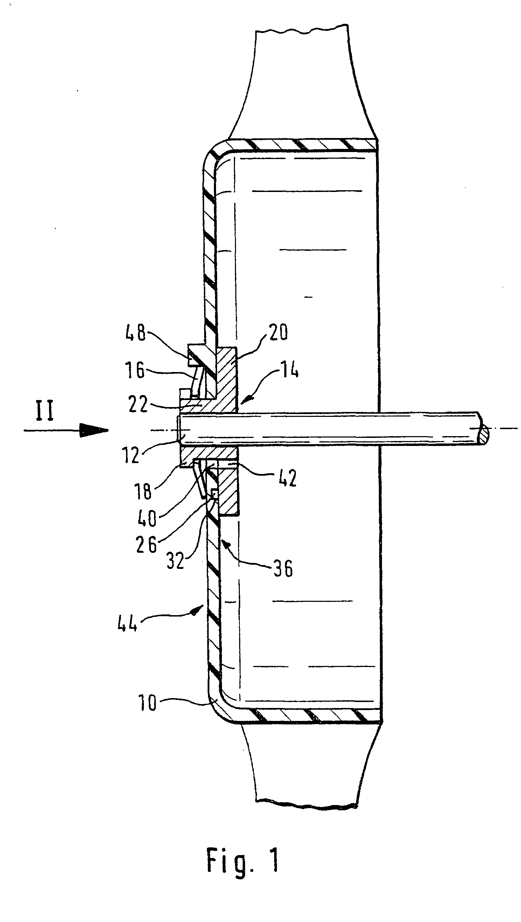

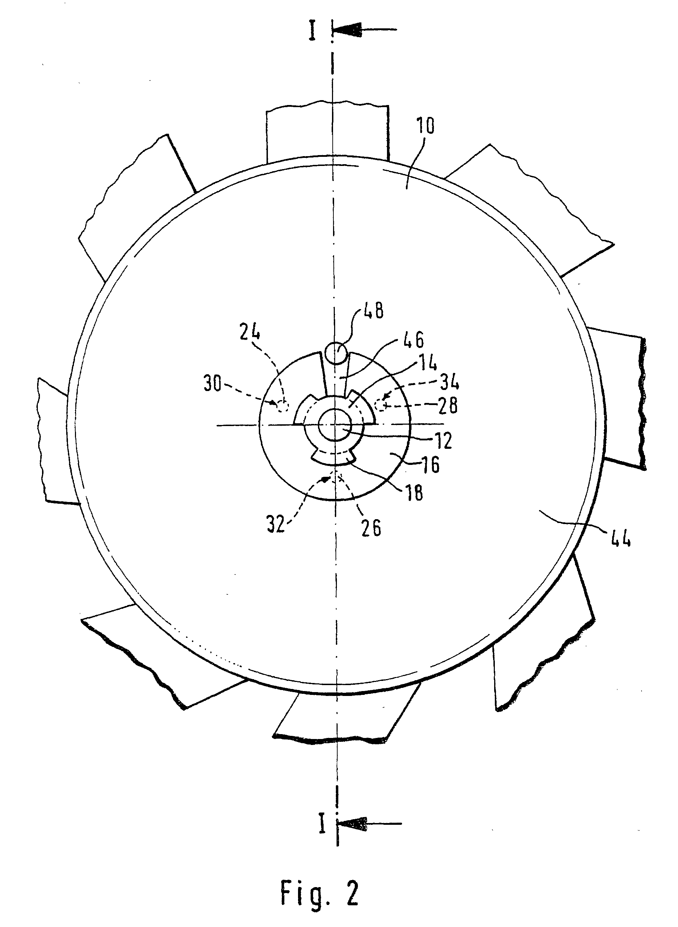

Die in Figur 1 im Querschnitt und in der Figur 2 in einer Ansicht dargestellte Vorrichtung zum Befestigen eines Anbauteils 10 auf einer Antriebswelle 12 besteht im wesentlichen aus einem Mitnehmer 14 sowie einem Federelement 16. Der Mitnehmer 14 ist auf das freie - in Figur 1 linke - Ende der Antriebswelle 12 eines in der Figur 1 nicht dargestellten Motors geschoben und umfasst diese Antriebswelle 12 kraftschlüssig und somit drehfest. Das Federelement 16 fixiert axial das Anbauteil 10 auf dem Mitnehmer 14 und sichert es auf diese Art auf der Antriebswelle 12.

Die Antriebswelle 12 ist im wesentlichen glatt, d.h. bis auf eine eventuell vorliegende Restrauhigkeit weist sie keinerlei Nuten, Rändel oder sonstige Profilierung auf.

Der Mitnehmer 14, der die Antriebswelle 12 drehfest umfasst, weist ein Mittelstück 22 und zwei speziell ausgeformte Enden auf. An seinem einen - in der Figur 1 linken - Ende besitzt der Mitnehmer 14 eine kragenförmige Verbreiterung 18, die im Ausführungsbeispiel dreifach unterbrochen ist, wie in der Ansicht der Vorrichtung in Figur 2 zu erkennen ist. Die Unterbrechung der kragenförmigen Verbreiterung 18 des Mitnehmers 14 gestattet es fertigungstechnisch, Verbindungsstege zwischen dem Mittelstück 22 und der kragenförmigen Verbreiterung 18 des Mitnehmers stehen zu lassen und sorgt somit für die mechanische Stabilität des Mitnehmers 14.

An seinem zweiten - in der Figur 1 rechten - Ende besitzt der erfindungsgemäße Mitnehmer 14 eine tellerähnliche Verbreiterung 20 seines Durchmessers. Zwischen diesen beiden Enden des Mitnehmers 14 befindet sich das verbindende Mittelstück 22. Die tellerähnliche Verbreiterung 20 des Mitnehmers 14 weist Aussparungen 42 entsprechend der Lage und Anzahl der mehrfach unterbrochenen kragenförmigen Verbreiterung 18 auf. Durch diese Aussparungen 42 kann bei der Herstellung des Mitnehmers 14 im Formungsprozess eine Werkzeughälfte hindurchfahren, um die Unterseite der kragenförmigen Verbreiterung 18 zu formen.

Das Anbauteil 10 hat entsprechend der im Ausführungsbeispiel vorliegenden Segmentierung der kragenförmigen Verbreiterung 18 des Mitnehmers 14 drei Aussparungen 40, von denen in Figur 1 nur eine zu sehen ist. Durch diese Aussparungen 40 im Anbauteil 10 ist der Mitnehmer 14 mit seiner kragenförmigen Verbreiterung 18 hindurchführbar bis das Anbauteil 10 auf der tellerähnlichen Verbreiterung 20 des Mitnehmers 14 aufliegt.

Das Anbauteil 10 ist formschlüssig mit dem Mittelstück 22 des Mitnehmers 14 verbunden. Die tellerähnliche Verbreiterung 20 des Mitnehmers 14 besitzt auf ihrer, dem Anbauteil 10 zugewandten Seite mehrere, in diesem Beispiel drei, einstückig am Mitnehmer 14 ausgebildete Stifte 24, 26 und 28, von denen in Figur 1 nur der Stift 26 zu sehen ist, die formschlüssig in fluchtende Bohrungen 30, 32 und 34, auf der Innenseite 36 des Anbauteils 10 greifen und so die Drehbewegung des Mitnehmers 14 auf das Anbauteil 10 übertragen.

Ein kreisförmiges, einseitig offenes Federelement 16 in Form einer kegelstumpfförmigen Tellerfeder greift um das Mittelstück 22 des Mitnehmers 14, welches durch das Anbauteil 10 hindurch ragt, herum und stützt sich dabei zum einen an der Unterseite der kragenförmigen Verbreiterung 18 des Mitnehmers 14 ab. Zum anderen stützt sich das Federelement 16 auf der Außenseite 44 des auf der tellerähnlichen Verbreiterung 20 des Mitnehmers 14 aufliegenden Anbauteils 10 ab.

Auf diese Art wird das Anbauteil 10 fest zwischen die beiden Verbreiterungen 18 und 20 an den Enden des Mitnehmers 14 geklemmt und so in axialer Richtung auf dem Mitnehmer 14 fixiert und damit gleichzeitig auf der Antriebswelle 12 gesichert.

Das Federelement 16 zur axialen Befestigung des Anbauteils 10 am Mitnehmer 14 besitzt einen Federspalt 46. Dieser Federspalt 46 wird bei der Befestigung des Anbauteils 10 am Mitnehmer 14 über einen Positionierungsstift 48 gelegt, der auf der Aussenseite 44 des Anbauteil 10 ausgeformt ist. Durch diesen Positionierungsstift 48 kann sich das Federelement 16 nicht wesentlich gegen das Anbauteil 10 und den Mitnehmer 14 verdrehen. Der Positionierungsstift 48 verhindert so, dass der Federspalt 46 unter ein Segment der kragenförmigen Verbreiterung 18 des Mitnehmers 14 zu liegen kommt und somit das Federelement 16 nicht mehr gleichmäßig unter der kragenförmigen Verbreiterung 18 des Mitnehmers 14 eingespannt ist. Zudem können so Unwuchten, die durch das asymmetrische Federelement 16 entstehen können, ausgeglichen werden.

Die Erfindung ist nicht auf das beschriebene Ausführungsbeispiel beschränkt:

So kann z.B. der Mitnehmer 14 auf die Antriebswelle 12 des Motors direkt aufgepresst werden.

Auch ist die erfindungsgemäße Vorrichtung nicht auf die Verwendung einer kreisförmigen, einseitig offenen Tellerfeder beschränkt.

Die Übertragung der Drehbewegung des Mitnehmers 14 auf das Anbauteil 10 ist ebenfalls nicht auf die im Ausführungsbeispiel beschriebene Methode beschränkt. So lässt sich die Drehmitnahme durch eine - direkt am Mittelstück 22 des Mitnehmers 14 ausgebildete - Struktur (beispielsweise ein Steg) realisieren, wenn das so geformte Mittelstück 22 durch die - im vorgestellten Beispiel drei - Aussparungen 40 im Anbauteil 10 durchführbar ist. Dieser Steg greift dann im Anbauteil 10 in eine entsprechende Gegenstruktur, zum Beispiel eine Nut, derart, dass der Mitnehmer 14 Formschluss in Umfangsrichtung mit dem Anbauteil 10 hat.

## Patentansprüche

1. Vorrichtung zum Befestigen eines Anbauteils (10) mit einer im wesentlichen glatten Antriebswelle (12), mit einem Mitnehmer (14), der drehfest auf der Antriebswelle (12) sitzt, und eine Drehbewegung von der Antriebswelle (12) auf das Anbauteil (10) überträgt, und mit einem Federelement (16), das das Anbauteil (10) axial auf der Antriebswelle (12) sichert, **dadurch gekennzeichnet, dass** der Mitnehmer (14) das Anbauteil (10) durchdringt und sich das Federelement (16) zum einen direkt am Mitnehmer (14) und zum anderen direkt am Anbauteil (10) abstützt und so das Anbauteil (10) axial fixiert.

2. Vorrichtung nach Anspruch 1, **dadurch gekennzeichnet, dass** das Anbauteil (10) zwischen dem Federelement (16) und einem Teil des Mitnehmers (14) eingeklemmt ist.

3. Vorrichtung nach einem der Ansprüche 1 oder 2, **dadurch gekennzeichnet, dass** das Federelement (16) einteilig ausgebildet ist.

4. Vorrichtung nach einem der Ansprüche 1 bis 3, **dadurch gekennzeichnet, dass** der Mitnehmer (14) eine kragenförmige Verbreiterung (18) aufweist, an der sich das Federelement (16) abstützt.

5. Vorrichtung nach Anspruch 4, **dadurch gekennzeichnet, dass** das Anbauteil (10) Aussparungen (40) aufweist, durch die der Mitnehmer (14) mit seiner kragenförmigen Verbreiterung (18) hindurchführbar ist.

6. Vorrichtung nach einem der Ansprüche 1 bis 5, **dadurch gekennzeichnet, dass** das Anbauteil (10) Formschluss zum Mitnehmer (14) hat und diesen insbesondere formschlüssig umgreift.

7. Vorrichtung nach einem der Ansprüche 1 bis 6, **dadurch gekennzeichnet, dass** der Mitnehmer (14) eine tellerähnliche Verbreiterung (20) seines Durchmessers aufweist, an der sich das Anbauteil (10) abstützt.

8. Vorrichtung nach Anspruch 7, **dadurch gekennzeichnet, dass** der Mitnehmer (14) in der tellerähnlichen Verbreiterung (20) Aussparungen (42) entsprechend der Lage der kragenförmigen Verbreiterung (18) aufweist.

9. Vorrichtung nach einem der vorhergehenden Ansprüche, **dadurch gekennzeichnet, dass** das Federelement (16) eine kreisförmige, einseitig offene Tellerfeder ist.

10. Vorrichtung nach einem der Ansprüche 1 bis 9, **dadurch gekennzeichnet, dass** das Federelement (16) durch einen Positionierungsstift (48) auf dem Anbauteil (10) gegen nachträgliches Verdrehen gesichert ist.

11. Vorrichtung nach einem der vorhergehenden Ansprüche, **dadurch gekennzeichnet, dass** das zu befestigende Anbauteil (10) ein Flügelrad eines Lüfters ist.

12. Vorrichtung nach einem der vorhergehenden Ansprüche, **dadurch gekennzeichnet, dass** der Mitnehmer (14) auf die Antriebswelle (12) aufgepresst ist.

## Claims

1. Device for fixing a subassembly (10) to an essentially smooth drive shaft (12), having a carry-along means (14), which sits in a rotationally fixed manner on the drive shaft (12) and transmits a rotational movement from the drive shaft (12) to the subassembly (10), and having a spring element (16), which secures the subassembly (10) axially on the drive shaft (12), **characterized in that** the carry-along means (14) penetrates the subassembly (10), and the spring element (16) is supported, on the one hand, directly on the carry-along means (14) and, on the other hand, directly on the subassembly (10) and therefore fixes the subassembly (10) axially.

2. Device according to Claim 1, **characterized in that** the subassembly (10) is clamped between the spring element (16) and part of the carry-along means (14).

3. Device according to either of Claims 1 and 2, **characterized in that** the spring element (16) is of single-part design.

4. Device according to one of Claims 1 to 3, **characterized in that** the carry-along means (14) has a collar-shaped enlargement (18) on which the spring element (16) is supported.

5. Device according to Claim 4, **characterized in that** the subassembly (10) has cutouts (40) through which the collar-shaped enlargement (18) of the carry-along means (14) can be guided.

6. Device according to one of Claims 1 to 5, **characterized in that** the subassembly (10) has a form-fitting connection to the carry-along means (14) and fits around the latter in particular in a form-fitting manner.

7. Device according to one of Claims 1 to 6, **characterized in that** the carry-along means (14) has a plate-like enlargement (20) of its diameter, on which the subassembly (10) is supported.

8. Device according to Claim 7, **characterized in that** the carry-along means (14) has cutouts (42) in the plate-like enlargement (20) corresponding to the position of the collar-shaped enlargement (18).

9. Device according to one of the preceding claims, **characterized in that** the spring element (16) is a circular disc spring which is open on one side.

10. Device according to one of Claims 1 to 9, **characterized in that** the spring element (16) is secured against subsequent rotation by means of a positioning pin (48) on the subassembly (10).

11. Device according to one of the preceding claims, **characterized in that** the subassembly (10) which is to be fixed is an impeller of a fan.

12. Device according to one of the preceding claims, **characterized in that** the carry-along means (14) is pressed onto the drive shaft (12).

## Revendications

1. Dispositif de fixation d'un accessoire (10) sur un arbre d'entraînement (12) pour l'essentiel lisse, comportant un toc d'entraînement (14) placé de façon non rotative sur l'arbre d'entraînement (12), et qui transmet un mouvement de rotation à partir de l'arbre d'entraînement (12) sur l'accessoire (10), et comportant un élément élastique (16) qui maintient l'accessoire (10) axialement sur l'arbre d'entraînement (12),
**caractérisé en ce que**
le toc d'entraînement (14) traverse l'accessoire (10), et l'élément élastique (16) s'appuie d'une part directement contre le toc d'entraînement (14) et d'autre part directement contre l'accessoire (10) et fixe ainsi axialement l'accessoire (10).

2. Dispositif selon la revendication 1,
**caractérisé en ce que**
l'accessoire (10) est serré entre l'élément élastique (16) et une partie du toc d'entraînement (14).

3. Dispositif selon l'une des revendications 1 ou 2,
**caractérisé en ce que**
l'élément élastique (16) est d'une seule pièce.

4. Dispositif selon l'une des revendications 1 à 3,
**caractérisé en ce que**
le toc d'entraînement (14) présente un élargissement (18) en forme de collerette contre lequel s'appuie l'élément élastique (16).

5. Dispositif selon la revendication 4,
**caractérisé en ce que**
l'accessoire (10) présente des évidements (40) à travers lesquels peut être inséré le toc d'entraînement (14) avec son élargissement (18) en forme de collerette.

6. Dispositif selon l'une des revendications 1 à 5,
**caractérisé en ce que**
l'accessoire (10) possède des formes correspondantes à celles de le toc d'entraînement et entoure celui-ci en particulier par combinaison de formes.

7. Dispositif selon l'une des revendications 1 à 6,
**caractérisé en ce que**
le toc d'entraînement (14) présente un élargissement (20) en forme d'assiette de son diamètre, contre lequel s'appuie l'accessoire (10).

8. Dispositif selon la revendication 7,
**caractérisé en ce que**
le toc d'entraînement (14) présente dans l'élargissement (20) semblable à une assiette des évidements (42) correspondants à la position de l'élargissement (18) en forme de collerette.

9. Dispositif selon l'une des revendications précédentes,
**caractérisé en ce que**
l'élément élastique (16) est une rondelle Belleville circulaire, ouverte sur un côté.

10. Dispositif selon l'une des revendications 1 à 9,
**caractérisé en ce que**
l'élément élastique (16) est protégé contre une rotation ultérieure par une tige de positionnement (48) sur l'accessoire (10).

11. Dispositif selon l'une des revendications précédentes,
**caractérisé en ce que**
l'accessoire (10) à fixer est une roue à ailettes d'un ventilateur.

12. Dispositif selon l'une des revendications précédentes,
**caractérisé en ce que**
le toc d'entraînement (14) est emmanché sur l'arbre d'entraînement (12).
